# EUROPEAN PATENT APPLICATION

(11) **EP 1 422 636 A1**
(43) Date of publication of application: **26.05.2004**
(21) Application number: 02026372.9
(22) Date of filing: 25.11.2002
(51) Int. Cl.: G06F 17/30

(54) **Structured data set generation system and method**

(71) Applicant: SUN MICROSYSTEMS, INC., Palo Alto, California 94303 (US)
(72) Inventor: Janssen, Ocke, 20255 Hamburg (DE)
(74) Representative: HOFFMANN - EITLE

(57) **Abstract**

A method and system for adding a new table to a database by defining the primary key of the new table on the basis of a column copied from a pre-existing table. The corresponding column of the new table may simply have the same identity as the column from which it is copied, may comprise some or all of the actual data entries of that column. Meta data such as the data type and precision of the column may also be copied.

## Description

### Field of the invention

The invention relates to a method and a system for the generation of new structured data set elements.

### Background of the invention

With the continually shrinking costs of computing power, computers are becoming more and more important in virtually all aspects of human activity. Furthermore, improved telecommunications has lead to increasingly thorough and pervasive collection of information by means of these computing devices. This collected information forms the basis of increasingly large and numerous databases upon which depend a vast range of commercial, governmental and other activities. With this increasing importance of databases, a need is increasingly felt for simple and efficient methods for the generation and editing thereof.

Present methods of generation of new structured data set elements involve the repeated input at different times of information already present for other, existing elements. This is inefficient in itself, and exacerbated by the possibility of variations in the values entered where they intended to be the same leading to faults in the structure of the data set itself, or errors in the processing thereof.

### Summary of the Invention

It is therefore desirable to address the drawbacks of the methods of organizing data as known in the prior art. It is further desirable to improve the facility with which a new structured data set may be created.

According to an example of a method of organizing data according to the present invention, the method includes the operations of referring to an existing structured data set and retrieving a characteristic thereof, performing a processing operation so as to generate a new structured data set, and determining an attribute of the structure of said new structured data set on the basis of said characteristic. According to this method it is therefore unnecessary to enter new details of the attribute for the new data structure.

The characteristic may be determined so as to be identical to an attribute of said existing structured data set. This has the further advantage of eliminating the possibility of differences arising in the definition of the characteristic and the attribute, where it is desirable that the two should be the same.

The existing structured data set may be incorporated in a database. The use of a database for the storing of structured data offers an efficient method of accessing the structured data.

The method may comprise the further operation of retrieving information from said database enabling the selection of said existing dataset from a plurality of datasets in said database. The new structured data set may further be added to the database. By this further measure, the applicability of the invention is extended to larger data sets.

The method may comprise the further operation of identifying at least one characteristic of said existing dataset apt for use as said attribute and may comprise the further operation of identifying all characteristics of said existing dataset apt for use as said attribute. The method may comprise the further operation of receiving a selection instruction indicating which of said characteristics of said existing dataset apt for use as said attribute is to be used as said attribute. These features enhance the compatibility of the method of the invention with larger and more complex data structures.

The database may be a relational database. This structure is a widespread, well documented and efficient form of data structure, which is particularly appropriate to the present invention.

At least one of said new structured data set and said existing structured data set may be a relation.

The attribute may comprise the identity of the primary key of said new structured data set. The characteristic may be the identity of a candidate key of said existing structured data set.

The characteristic may further comprise other data descriptive of said candidate key of the existing structured data set. This maximises the increase in efficiency and accuracy offered by the present invention.

Moreover, the characteristic may comprise data belonging to the candidate key of said existing structured data set.

The method may further comprise the further operations of generating a graphical representation of at least a part of said existing structured data set is generated, and displaying said graphical representation to a user. The graphical representation may be generated so as to display aspects of said existing structured data set apt for use as said attribute. The selection indication may be generated in response to interaction with said graphical representation. These features may assist an eventual end user in the supervision and even the control of the method of the invention.

At least one of the operations of retrieving and determining may be realised by means of Structured Query Language. Use of this defined standard ensures the compatibility of the invention with the majority of existing databases.

The method may comprise the further operations of maintaining a link between said characteristic of said existing structured data set and said attribute of said new structured data set, and modifying one of said existing structured data set and said attribute of said new structured data set in response to any change in the other of said existing structured data set and said attribute of said new structured data set respectively, so that the two remain identical. Thus is possible to extend the benefits of the present invention beyond the creation of a new structured data set, so that consistency in maintained between data sets during later amendment of the data structure.

According to another example, there is provided a structured data set generation system, comprising a referring unit adapted to refer to an existing structured data set and to retrieve a characteristic thereof, a processor comprising a generation unit adapted to generate a new structured data set, and a determination unit adapted to determine an attribute of the structure of said new structured data set on the basis of said characteristic, wherein the processor is in communication with said referring unit and with said determination unit.

Further, according to another example, there is provided a program having instructions adapted to carry out the method as described above. A data structure or data stream may have instructions adapted to cause data processing means to carry out the method as described above.

According to another example, there is provided a computer readable medium in which this program is embodied.

Further, according to another example, there is provided a computer program product comprising the computer readable medium.

Further, according to another example, there is provided a computer system comprising a system as described above.

Further features of the invention are disclosed in further claims.

### Brief Description of the Drawings

For a better understanding of the invention, and to show how the same may be carried into effect, reference will now be made by way of example, to the accompanying drawings, in which:
- Figure 1: shows a method of organising data according to an embodiment of the present invention.
- Figure 2: shows a structured data set generation system according to an embodiment of the present invention.
- Figure 3: shows a structured data set generation system according to an embodiment of the present invention.
- Figure 4: shows a method according to a further embodiment of the present invention.
- Figure 5: shows a structured data set generation system according to a further embodiment of the invention.
- Figure 6: shows a method according to a further embodiment of the invention.
- Figure 7: shows the structured data set generation system according to a further embodiment of the present invention.
- Figure 8: shows a series of four elements of such a graphical user interface, by means of which a user may cause the generation of a new data set.
- Figure 9: shows a method according to a further embodiment of the present invention.
- Figure 10: shows a structured data set generation system according to a further embodiment of the invention.
- Figure 11: shows a structured data set generation system realised in a client-server architecture according to a further embodiment of the invention.
- Figure 12: shows a structured data set generation system realised in a client-server architecture according to a further embodiment of the invention.

### Detailed Description of the Preferred Embodiments

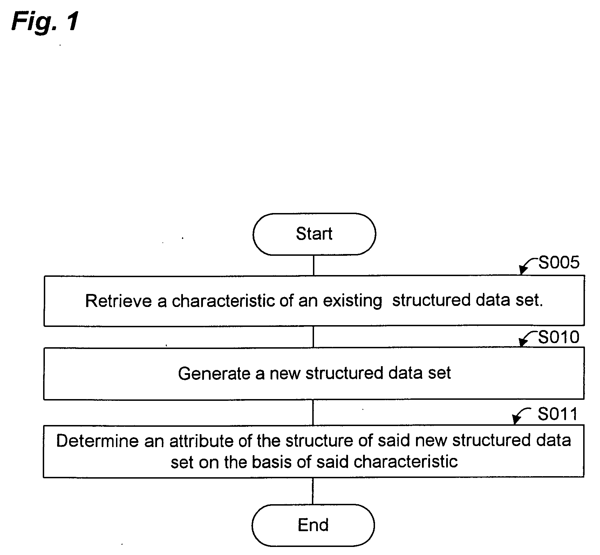

Figure 1 shows a method of organising data according to an embodiment of the present invention.

According to this method, in order to add a new structured data set in addition to an existing structured data set, there is first carried out an operation S005 of retrieving a characteristic of the existing structured data set. The new structured data set is then generated at operation S010. Thereafter, the attribute of the new structured data set is determined at operation S011 on the basis of the characteristics retrieved from the existing structured data set S005. According to this method it is therefore unnecessary to enter new details of the attribute for the new data structure.

The retrieving of a characteristic may involve for example selecting a column from an existing table in a database. A new table is then generated using this column.

According to an example, this method may be applied to a relational database, as discussed above, stored as one or more files in a conventional computer system for example in a Random Access Memory, a hard drive, etc. The existing structured data set may be a first relation in this relational database, having a primary key, and a candidate key, and the new structured data set is a new relation to be added to the relational database, having a primary key corresponding to the same variable, or column name, as the candidate key of the first relation. Thus, according to the method of the present example as described above, rather than entirely defining the new relation from scratch, the method refers to the first relation at operation S005, and retrieves the candidate key thereof. When the new relation is generated at operation S010, the primary key thereof corresponding to the attribute of the method of Figure 1 can be defined on the basis of the candidate key retrieved from the existing relation at operation S005. By this means, any possibility of differences arising between the two corresponding elements of the two relations can be eliminated.

Generally, this will mean that the two elements of the two relations are identical.

The information retrieved relating to the characteristics of the existing data set may simply be the identity thereof, or metadata descriptive of other properties of that element, for example, its data type, precision, etc., or may even include the data stored in the attribute (i.e. column) itself.

The new relation may go on to form the basis of an entirely new database, made from an entirely independent electronic record in its own right, or may be added to the same database as that in which the original data set is located.

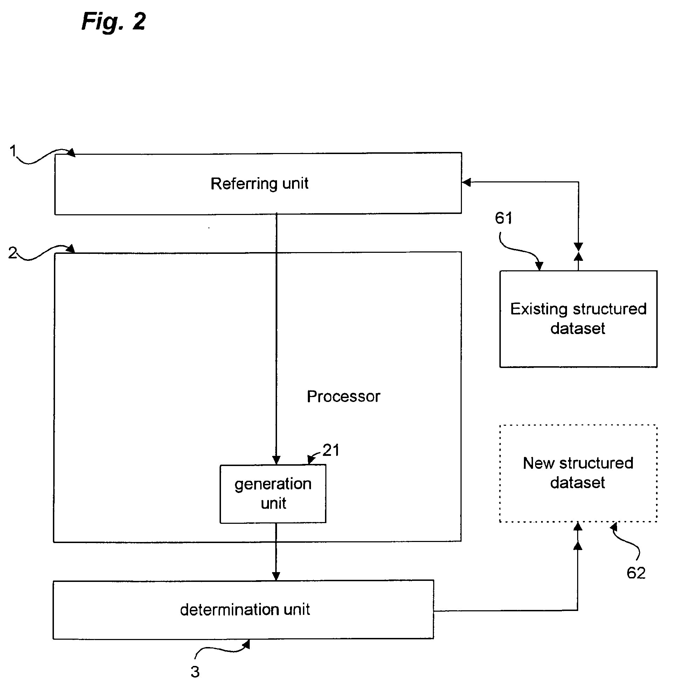

In the following a further embodiment of the invention will be described with regard to Fig. 2, showing a structured data set generation system according to an embodiment of the present invention.

According this embodiment of the invention, there is provided a structured data set generation system, comprising a referring unit 1, which is able to refer to an existing structured data set 61, and to retrieve a characteristic thereof. The system further comprises a processor 2, comprising a generation unit 21 which is able to generate a new structured data set 62, and finally a determination unit 3 which is able to determine an attribute of the structure of the new structured data set 62 on the basis of the characteristic retrieved from the existing structured data set 61.

According thereto it is unnecessary to enter new details of the attribute for the new data structure.

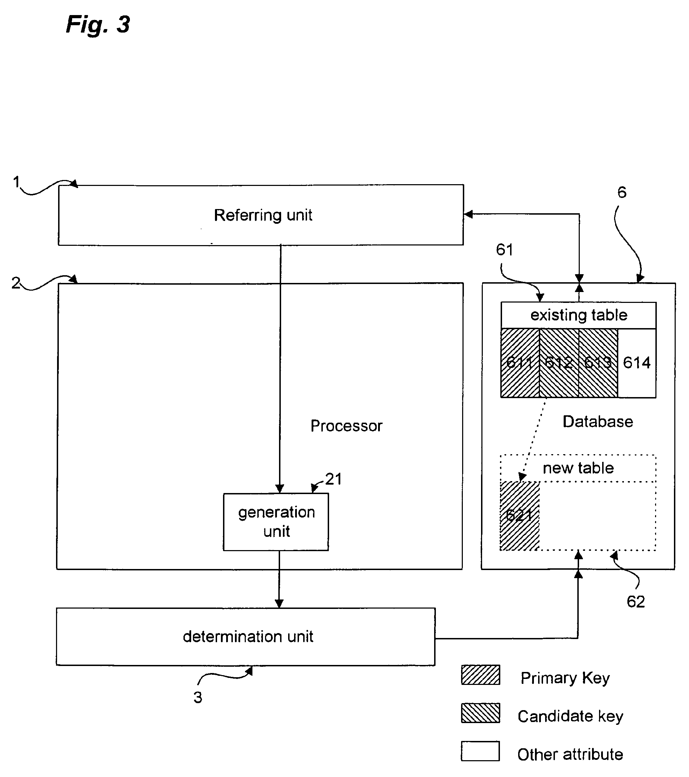

In the following, examples of the elements of a system for submitting computing jobs in a distributed computing environment will be outlined in further detail with regard to Fig. 3.

Figure 3 shows a further embodiment of the present invention. The embodiment of the invention shown in figure 3 comprises all features of the present invention described with reference to figure 2. According to this embodiment however, the system further comprises a database, in which said existing structured data set is incorporated, i.e. there is further provided a database 6, in which the existing structured data set 61 is stored. Further, when the new data structure 62 is generated, it too may be stored in this database 6 or otherwise to another database, or be used to form a stand alone electronic record, or otherwise used outside the database 6. In the context of this embodiment of the invention, the structured data sets 61 and 62 may comprise tables. The database may further comprise the new structured data set.

It is noted that the following constitute examples only and should not be construed as limiting the scope of the invention.

Taking once again the exemplary case of a relational database, in operation, the referring unit 1 communicates with the existing structured data set, or, in the present case, table 61 so as to retrieve a characteristic thereof. In an example the existing table 61 comprises a primary key 611, two candidate keys 612 and 613, and another attribute (or column) 614. The referring unit 1 may, for example, extract details of candidate key 612, and pass this information to the generation unit 21 in the processor 2. The generation unit 21 then generates the new structured data set 62, which may be a relation or new table, comprising as its primary key 621 the information retrieved from the existing table 61, in its candidate key column 612. The existing structured data set and the new structured data set form part of a database 6. The determination unit 3 then acts so as to create the new table 62 as defined by the generation unit 21, in particular such that the new table has as its primary key information corresponding to that found in the candidate key 612 of the existing table 61.

The information retrieved from the existing structured data set 61 and used in the generation of the new structured data set 62 may comprise simply the identity of the candidate key 612, or may further comprise metadata relating to the structure of that attribute such as its data type, precision, etc., or may yet further comprise the actual data entries of that attribute (or column).

The determination unit may further determine said characteristic so as to be identical to an attribute of said existing structured data set. However, although generally it is desirable that the two attributes 612 and 621 should be identical after the generation of the new structured data set 62, under some circumstances it may be desirable for differences to be introduced.

The referring unit 1, processor 2 and determination unit 3 may each take the form of dedicated hardware, for example as a microchip or a plurality thereof, or consist of firmware loaded into for example an EPROM, or further consist of a set of software routines stored in a storage device such as Random Access Memory, a hard drive, a CDROM etc. The referring unit 1, processor 2 and determination unit 3 may further comprise any combination of the above forms. By way of example, the functions of the referring unit 1 and the determining unit 3 may be performed either partially or wholly by an Input/Output interface of a computing device. Other parts of the functions of the referring unit 1 and the determining unit 3 may by carried out in a dedicated hardware device, which may also perform some or all of the functions of the processor, 2. Alternatively, these functions may be carried out as computing operations executed in a computer processor, which may be a conventional processor or one adapted for the performance of the present example. The software program causing these operations may be stored in a memory device such as Read Only Memory, Random Access Memory, a hard disk, a Compact Disk and so on.

The different processes performed in the described embodiments may also be divided between a server, and a client station. By way of example the referring unit 1, processor 2 and determination unit 3 may all be situated in a user station, and the database 6 in the server (not shown). Alternatively, the Processor 2 may all be situated in a user station and the referring unit 1, determination unit 3 and database 6 the Server 102, or any other arrangement as appropriate. The functions of any individual unit as described above may also be split between the client and server.

The existing data structure may be accessible by a plurality of processes simultaneously, some or all of which processes may be in accordance with embodiments of the present invention.

In the following examples of elements of the embodiment of Fig. 3 will be outlined in further detail. It is, however, noted that the following constitute examples only and should not be construed as limiting the scope of the invention.

The database 6 is preferably a relational database. In a relational database, data is conceptually represented in two dimensional tables consisting of rows and columns. Strictly speaking, the tables are called relations, the rows, tuples and the columns, attributes. A relational database uses attribute values to associate data from different tables. Relational systems provide a development environment that is significantly easier to use than that provided by previous approaches. The data structures are simple to build and easy to understand and the writing of programs to manipulate them relatively straightforward. For these reasons, in recent years the vast majority of producers of new database systems based their products to a greater or lesser extent on the relational model. One of the great benefits of relational databases is that data can be retrieved from any set of relational tables using a combination of just eight intuitively simple relational operations. These comprise what is known as the relational algebra. The five basic operations of relational algebra are: restrict, project, times, union and minus. There are additionally three derived operations: join, intersect and divide. These are derived in that they can be built from the basic operations. However, it is convenient to treat them as if they were basic operations. All relational systems in the known art use the algebra to return data from tables. However the algebra is rarely supported directly by a system. Most systems provide an additional interface frequently in the form of the SQL (Structured Query Language) language. At least one of the referring unit and the determination unit may carry out its respective operations at least partially by means of Structured Query Language.

SQL is a declarative database language where users can write a statement that describes a given set of data. The task of the SQL interpreter is to break the given SQL statements down into a series of algebraic operations that will build the database described by the statement. One major principle of the relational algebra is that all of its operations work at the relation level alone. The only argument they may take is a relation or a set of relations and all that they return is a single relation that satisfies the constraints placed by the operation. The relations provided to the argument must, by definition exist within the given database, either as base relations or views. The resulting relation is a temporary relation that has been derived by applying an operation to the given relation.

SQL, which was originally devised in the 1970's as a language for relational databases and has since become the *de facto* industry standard language for relational systems. With SQL, a database user can create and delete data held in relations, enforce relational integrity rules and perform the full range of operations required by the relational algebra. It is a relationally complete language, but is not as yet a computationally complete language. It exists merely as an interface to data held in relations. Only some very basic data processing functions are provided. Complete applications usually require SQL course to be embedded within computationally complete language such as C, Fortran, Cobol, Pascal or Ada.

SQL has undergone a series of standardisations, and not all relational products that support SQL necessarily support all of the most recent standards.

Using SQL, a sequence of operations is specified in terms of the relational algebra, for retrieving a given set of data. This command is then translated by the underlying system in to a series of algebraic operations. As well as retrieving data from a relational database, SQL also has provisions for database creation and database security. There are three basic types of SQL command:
1. Data definition commands. These are commands that define a content of a relational database in terms of tables and views. A table is the equivalent of a base relation. These commands include column definition expressions that define the attributes of a table. A view is defined by using a data manipulation command to specify its data content.
2. Data manipulation command. These commands are used to search, retrieved, update and delete data held in tables and views. They include simple facilities for processing the data held in tables and views.
3. Data control commands. These are used for controlling access to tables and views.

A candidate Key is an attribute or set of attributes that can be used to identify uniquely each tuple in a relation. (i.e. has a different value in every row).

A primary key is a special form of candidate key. It may be possible to have more than one key for a relation, and one candidate key is nominated as the primary key, i.e. that which is used to identify the row.

A foreign key is an attribute (or set of attributes) that exists in more than one table and which is the primary key for one of those tables.

According to one method of organising data, where it is necessary to generate a new structured data set, that structured data set is generated in its entirety on the basis new data, for example, as provided by a user, without reference to the data already present.

Where it is intended however, that there should exist between elements of different structured data sets a logical connection, wherein the two data sets contain elements corresponding to a single variable, this method can lead to problems.

For example, if a database contains a relation (table) having a given primary key, and a new relation (table) having a candidate key corresponding to the same variable as the primary key of the first table, variations may easily arise in the definition of these two attributes, where in principle they should be identical. For example, in the definition of the second relation, characteristics of the candidate key may differ from those already defined for the first relation such characteristics may be for example the data type, that is, whether this column contains integer data, a real number, character data, a date, an amount of money, etc., the precision, i.e. in the case of a character string, the number of characters allowed, in the case of a real number, the number of decimal places, etc., and so on. These differences may give rise to inaccuracies, inconsistencies, and even corruption of the database itself. It is therefore highly desirable to reduce the likelihood of such problems.

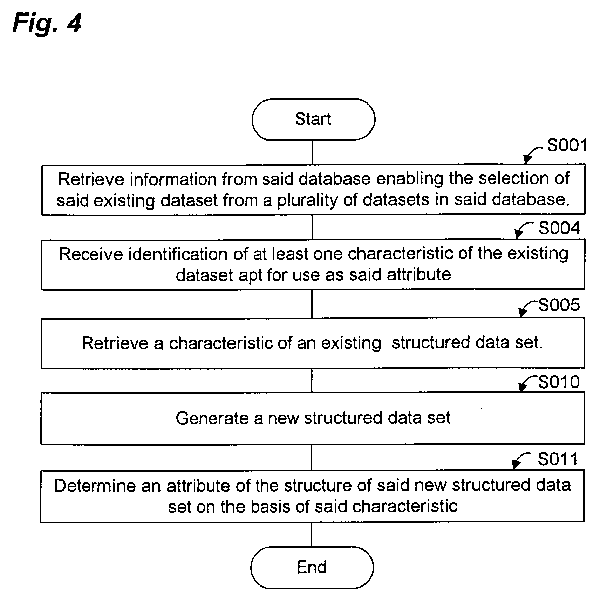

In the following a further embodiment of the invention will be described with regard to Fig. 4.

Figure 4 shows a method according to a further embodiment of the present invention. This method comprises operations S005, S010 and S011 as described hereto for with respect to Figure 1 and further includes operations S001 and S004.

In operation S001 information from a database in which the existing data set is stored is retrieved and at least one characteristic of the existing data set is identified for use as the attributes to be used in the new structured data set which is to be generated later in the operation S010.

A real relational database is likely to comprise more than one relation. Where this is the case, it will be necessary to select from which of the relations (data sets) in the database, the characteristic to be used in the generation of the new structured data set is to be extracted. Furthermore, it is unlikely that all columns (or attributes) of the selected existing data sets will be suitable for use as the attributes used in the generation of the new structured data set. Operation S001 thus offers the opportunity to retrieve information from the database by identifying all the data sets found therein which might be used as the 'existing data set' of the method described above.

Operation S001 may be realised by means of a series of SQL instructions transmitted to the database in which the candidate existing data sets (i.e. the relations of which the database is composed) are found, so as to provoke a response from the data set providing a list, also in terms of the SQL language, of the structured data sets or relations found therein.

The identification of the characteristics of the existing data set selected at operation S001 may comprise simply detecting which characteristics of the selected data sets are candidate keys, that is, identifying which attributes or set of attributes can be used to identify uniquely each tuple in that relation. Once again, this may be carried out by retrieving the contents of the selected existing data set by means of SQL commands and responses transmitted to the database in which the selected existing data set is stored.

Once the selection of operation S001 is made, in operation S004 an identification of the characteristics of the selected data sets are suitable for use as the 'attribute used in the generation of the new structured data set' is received.

Thereafter operations S005, S010 and S011 are carried out, as described with regard to Fig. 1, i.e. the characteristic of the existing structured data set is retrieved in operation S005, a new structured data set is generated in operation S010 and an attribute of the structure of the new structured data set is determined on the basis of the characteristic in operation S011.

The selection of the dataset to be used as the existing data set, as well as other selection, editing and control procedures may be carried out or influenced by a user, for example involving manual data entry, for example using standard computer user interface techniques such as keyboard entry, point and click with a cursor control device etc. In particular, this definition process may involve the generation of a graphical representation of aspects of the first data structure, for example as displayed on a computer's VDU.

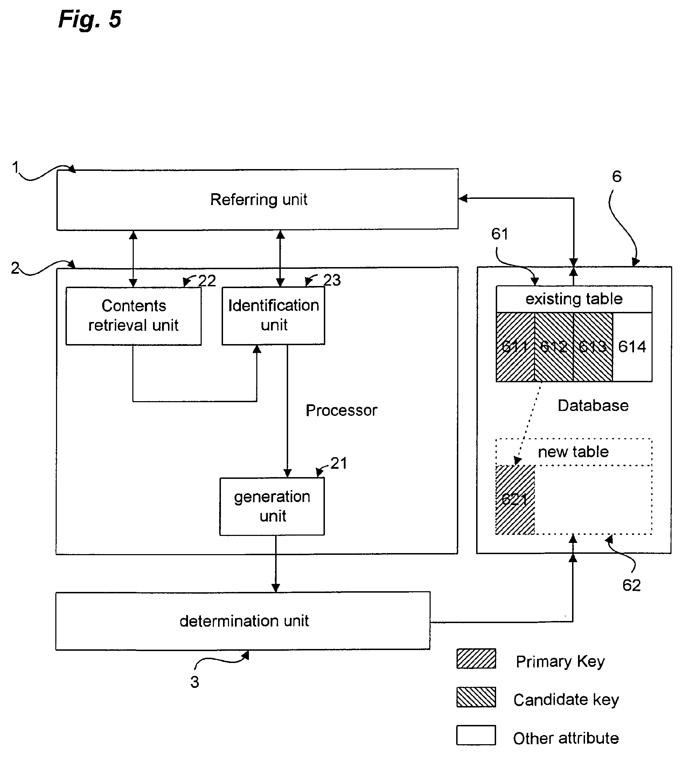

In the following a further embodiment of the invention will be described with regard to Fig. 5.

Figure 5 shows a structured data set generation system according to a further embodiment of the invention. The system shown in Figure 5 comprises all of the same elements described above with reference to Figure 3.

According to the embodiment of Figure 5, the processor further comprises a contents retrieval unit 22 to retrieve information from said database via said referring unit, said information being such as to enable the selection of said existing dataset from a plurality of datasets in said database. The processor may further comprise an identification unit for identifying at least one characteristic of said existing dataset apt for use as said attribute. The identification unit may be to identify all characteristics of said existing dataset apt for use as said attribute.

The identification unit performs the function of identifying at least one characteristic of the existing data set for use as the attribute used in the generation of the new data set defined by the generation unit 21. The contents retrieval unit acts to retrieve information from the database 6 in which the existing table 61 exists, via the referring unit 1 so as to enable the selection of the existing data set from a plurality of data sets found in the database 6.

The contents retrieval unit 22, and identification unit 23, which form part of the processor 2 may each take the form of dedicated hardware, for example as a microchip or a plurality thereof, or consist of firmware loaded into for example an EPROM, or further consist of a set of software routines stored in a storage device such as Random Access Memory, a hard drive, a CDROM etc. The contents retrieval unit 22, and identification unit 23, may further comprise any combination of the above forms.

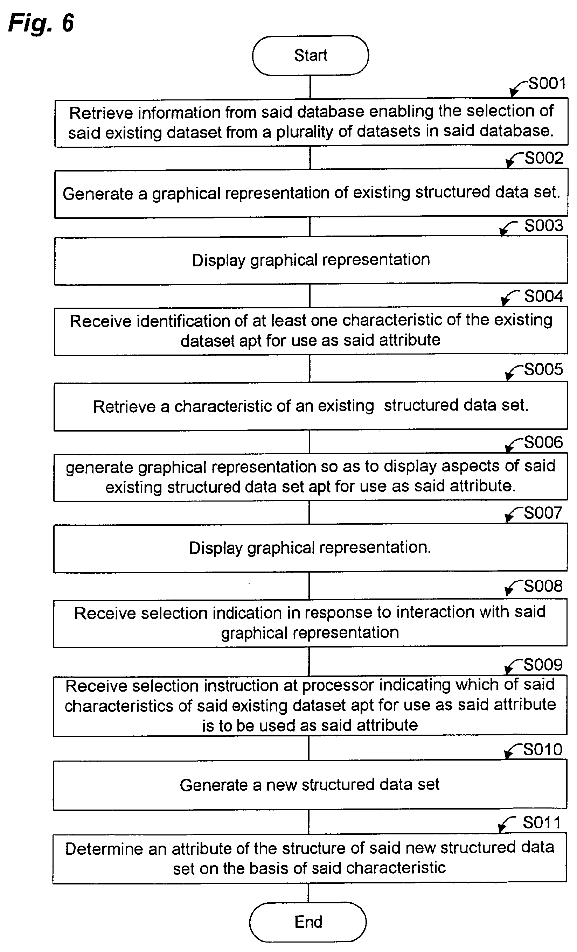

In the following a further embodiment of the invention will be described with regard to Fig. 6.

Figure 6 shows a method according to a further embodiment of the invention.

The method of Figure 6 comprises all of the operations S001, S004, S005, S010 and S011 as described above with regards to Figures 1 and 4.

The method as described according to Figure 6, further to the operations S001, S004, S005, S010 and S011 of Figures 1 and 4, comprises operations S002, S003, S006 - S009.

After operation S001, in the operation S002 a graphical representation of the existing structured data set is generated and in operation S003 the graphical representation is displayed.

Then in the operation S004 an identification of at least one characteristic of the existing data set is received which is suitable for use as said attribute and in operation S005 a characteristic of the existing structured data set is retrieved.

Similar to operation S003, the method comprises the further operation S006 of generating a graphical representation so as to display aspects of the existing structured data set apt for use as the attribute used in the generation of the new data set and an operation S007 of displaying the graphical representation.

In response to displaying the graphical representation in operation S008 a selection instruction signal is received at the processor in operation S009 in response to an interaction with the graphical representation, the selection instruction signal indicating which of the characteristics of the existing data set is to be used as the attribute in the generation of the new structured data set.

Then in operation S010 and S011 a new structured data set is generated and an attribute of its structure is determined.

Thus, according to the sequence of operations of the present embodiment,

In an example the list of data sets existing in database retrieved at operation S001 is displayed to a user at operation S003, such that the data structure to be used as a template can be selected by means, for example, of a user interaction. Similarly, at operation S007, the attributes identified as being apt for use as the attribute used in the generation of the new data structure at operation S006 can be displayed to the user at operation S007, and resulting from, for example, a user interaction, a selection instruction can be generated, at operation S008, which can be received at operation S009, and interpreted as to allow an active selection of which of the attributes of the existing data set at for use as the attribute to be incorporated into the new data set, that is, which of the candidate keys of the existing data set is to be used in the new data structure.

Thus, in situations where it is difficult, impossible, or undesirable to select which existing database, and which attributes thereof, is to be used in the generation of the data structure, external inputs can be gathered to facilitate the decision.

The graphical representation of the data structure may comprise for example a computer print-out, or an image or set of images displayed on a computer display device such as a VDU.

As described above, the present invention may be realised in conjunction with a graphical representation, which may itself form a part of a graphical user interface. That is, there may further be provided means for interacting with the representation, in any of the known methods associated with such user interfaces. For example, there may be provided a variety of buttons, slide a bars, drop down boxes, text boxes, menus and so on, with which the user may interact by means of keyboard inputs, mouse motion, and mouse button activations, mouse scroller wheel inputs, voice recognition commands, touch sensitive screen or pad inputs etc. By means of these interface elements and input devices, the user may interact with the visual representation presented to him, in order to provide instructions so as to control the eventual result of the application of the present invention.

The operations are preferably performed in numerical order, i.e. starting with S001, then S002, S003 and so on. In some cases it may be preferable to perform operations in a different order, or to perform certain operations simultaneously.

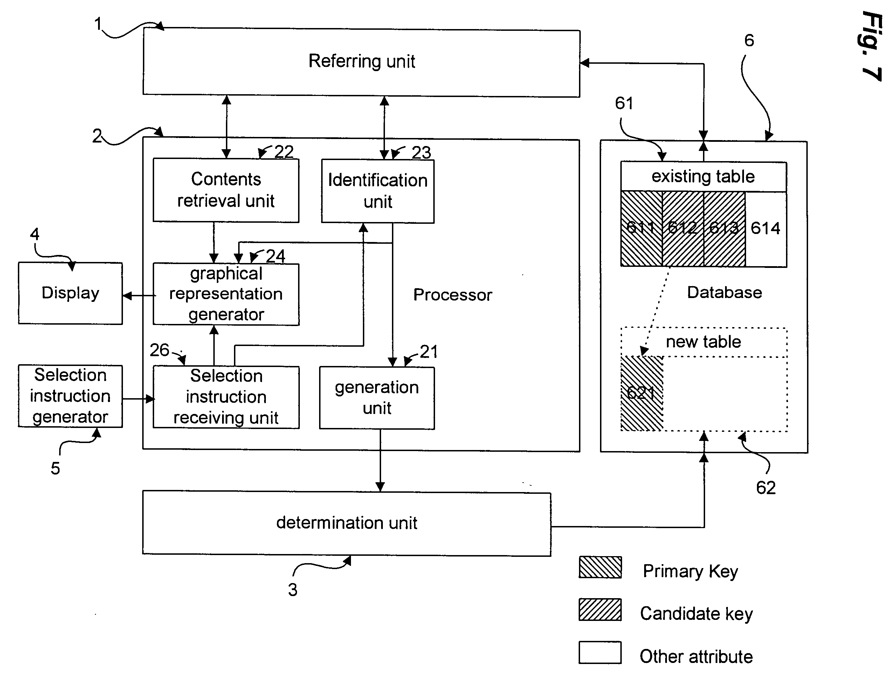

In the following a further embodiment of the invention will be described with regard to Fig. 7.

Figure 7 shows the structured data set generation system according to a further embodiment of the present invention.

According to the embodiment of the invention as shown in Figure 7, there are provided all of the same elements as in the embodiments described with respect to Figures 5 and 3 above and a description of these elements is omitted here.

According to this embodiment, the system further comprises a graphical representation generator 24 for the generation of a graphical representation of at least a part of said existing structured data set, and a display 4 for the display of the graphical representation of at least a part of said existing structured data set to a user, wherein said graphical representation generator 24 is in communication with said processor 2. The processor further comprises a selection instruction receiving unit 26 for receiving a selection instruction indicating which of the characteristics of said existing dataset apt for use as said attribute is to be used as said attribute.

The system further comprises a selection indication generator 5 for generating said selection indication in response to interaction with said graphical representation, wherein said selection indication generator 5 is in communication with said processor.

The graphical representation generator may cause said display to display aspects of said existing structured data set apt for use as said attribute.

The graphical representation generator 24 is in communication with the display 4, and the selection instruction generator 5 is in communication with the selection instruction receiving unit 26. Furthermore, the graphical representation generator 24 receives information from the contents retrieval unit 22 for retrieving information from said database via said referring unit, the identification unit 23, and the selection instruction receiving unit 26, while the identification unit 23 receives information from the selection instruction unit 26 and the referring unit 3.

The graphical representation generator 24 and the selection instruction receiving unit 26 may each take the form of dedicated hardware, for example as a microchip or a plurality thereof, or consist of firmware loaded into for example an EPROM, or further consist of a set of software routines stored in a storage device such as Random Access Memory, a hard drive, a CDROM etc. The referring unit 1, processor 2 and determination unit 3 may further comprise any combination of the above forms. By way of example, The functions of the graphical representation generator 24 may be performed either partially or wholly by a graphics processor unit, that is, a conventional piece of hardware intended specifically for the generation of information to be presented on a visual display unit. Other parts of the functions of the graphical representation generator 24 may be carried out in another dedicated hardware device. Similarly, the functions of the selection instruction receiving unit 26 may be performed either partially or wholly by an Input/Output interface of a computing device. Other parts of the functions of the instruction receiving unit 26 may be carried out in another dedicated hardware device. Alternatively, these functions may be carried out as computing operations executed in a computer processor, which may be a conventional processor or one adapted for the performance of the invention. The software program causing these operations may be stored in a memory device such as Read Only Memory, Random Access Memory, a hard disk, a Compact Disk and so on.

In operation, the graphical representation generator acts so as to generate representations of the data gathered by the contents retrieval unit and by the identification unit as discussed above, and to provide these to the display 4. The selection instruction generator 5 is active to produce a selection instruction, which when received at the selection instruction receiving unit is interpreted as indicating which of the characteristics of the existing data sets is to be used as the attribute in the generation of the new data set, and notifying the identification unit 23 and the graphical representation generator 24 accordingly.

By way of example, it will now be shown how the present invention can be applied to the creation of a new relation in a relational database.

A relational database may comprise a table such as this:

| existing structured data set | | | | |
|---|---|---|---|---|
| Primary key | candidate key | candidate key | | |
| TAX NO | EMPNO | EMPNAME | DEPTNAME | GRADE |
| 345 | 1 | F Jones | SALES | A |
| 346 | 2 | P Smith | ACCOUNTS | B |
| 347 | 3 | K Chan | SALES | A |
| 348 | 6 | J Peters | SALES | C |
| 349 | 9 | S Abdul | ACCOUNTS | A |
| 350 | 5 | J Lewis | RESEARCH | C |
| 351 | 10 | J Major | | B |

It can be seen that TAX NO, EMPNO and EMPNAME are candidate keys as defined above, as they each have a unique entry for each Tuple or row. In this particular database, TAX NO has been designated as the primary key.

When the present invention is applied to this database, one of the candidate keys is selected as the characteristic of the existing relation. The EMPNO column in the existing table may be selected for example. According to this embodiment of the present invention The new table is now created with an EMPNO column as the primary key. The EMPNO column in table 1 is now a foreign key. The existing table (or structured data set) and the new table (structured data set) are show below, as they exist after the creation of the new structured data set in accordance with this embodiment of the present invention.

| existing structured data set | | | | |
|---|---|---|---|---|
| Primary key | candidate key | foreign key | | |
| TAX NO | EMPNO | EMPNAME | DEPTNAME | GRADE |
| 345 | 1 | F Jones | SALES | A |
| 346 | 2 | P Smith | ACCOUNTS | B |
| 347 | 3 | K Chan | SALES | A |
| 348 | 6 | J Peters | SALES | C |
| 349 | 9 | S Abdul | ACCOUNTS | A |
| 350 | 5 | J Lewis | RESEARCH | C |
| 351 | 10 | J Major | | B |

| new structured data set | |
|---|---|
| primary key | |
| EMPNO | |
| 1 | |
| 2 | |
| 3 | |
| 5 | |
| 6 | |
| 9 | |

Further attributes and data can be added to the new relation as necessary.

| new structured data set | |
|---|---|
| primary key | |
| EMPNO | SKILL |
| 1 | German |
| 2 | Typing |
| 3 | German |
| 5 | Piano |
| 6 | Typing |
| 9 | French |

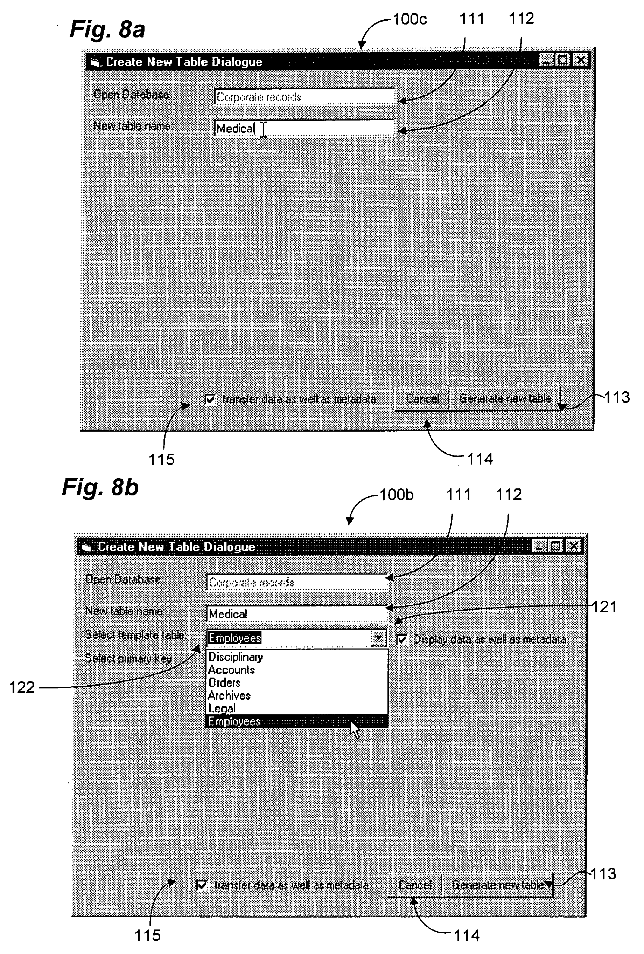

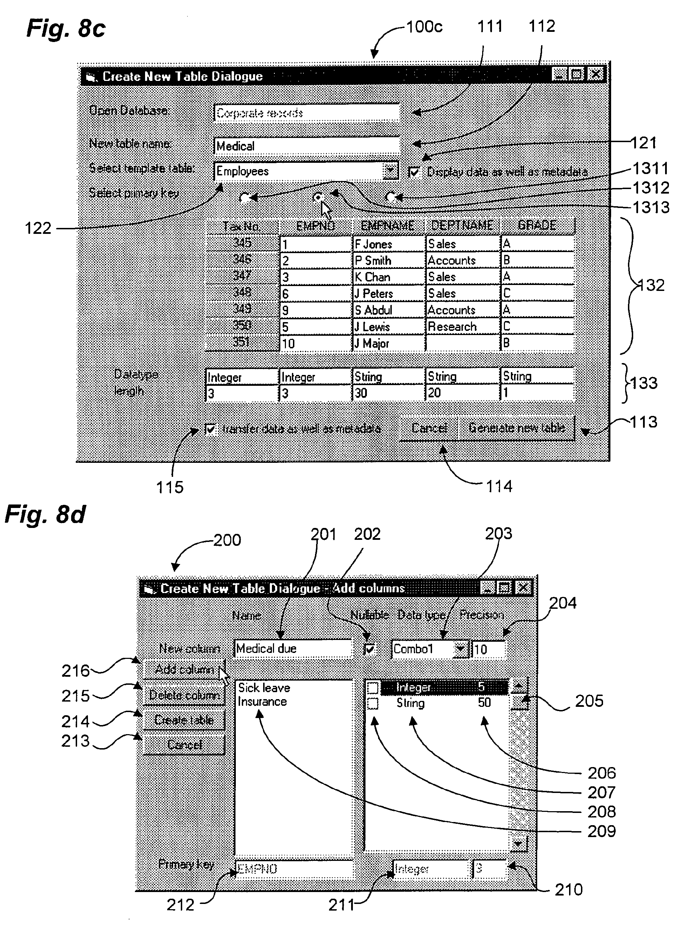

According to a preferred embodiment of the present invention, new tables, or relations are added to a database through the medium of a graphical user interface. Such an embodiment will now be described with reference to Figure 8.

Figure 8 shows a series of four elements of such a graphical user interface, by means of which a user may cause the generation of a new data set.

Figure 8a shows a first graphical user interface element.

A graphical user interface is a computer generated environment comprising a set of visual cues that are displayed to a user, and means for that user to give instructions, in such a way that the visual cues are modified in response to those instructions. The visual cues may involve indications of what instructions are possible, and also reflect the instructions presently being given. The cues are generally designed so as to intuitively reflect the nature of the instruction with which they are associated, often my means of an image conceptually representing the instruction. The cues are often drawn from a pool of commonly used elements, which are reused throughout the environment to reflect similar instructions in different contexts, further increasing the intuitiveness of the system. The environment is also often able to present other information to the user, either at the users request, or to provide the user with information which may be of use to him.

In the present example, when a user wishes to add a new table to an existing database the user indicates this in any of a variety of known manners, for example, by means of selecting an option from a menu existing in a database management environment software. According to this embodiment, the selection of this menu element will cause the dialog box 100 as shown in Figure 2A to be generated and displayed to a user. At this stage, the dialog box 100 comprises a text box 111, in which the name of the database to which the new table is to be added, and from which a template table is to be retrieved, a text box 112, in which the user enters the name of the new table to be generated, a button 113, bearing the title generic new table, a second button 114 bearing the inscription cancel, and a check box 115, the function of which will be described below.

In use the text box 115 displays the name of the database presently being managed in the database management environment. A user enters a name for the new table in the text box 112, and final clicks on the button generate a new table 113. If at any stage the user decides not to be proceed with the generation of a new table, the dialog can be closed by clicking the button cancel 114.

Once the button generate a new table 113 is clicked for the fist time, a new dropdown box 122 appears, along with a new check box 121.

By clicking on the down arrow to the right of the dropdown box 122, the user can cause to be displayed a list of all of the tables already existing in the open database, the name of which is indicated in box 111. The user can select from this list by clicking on the name of whichever of the existing tables he wishes to use. The user also has the option of checking or unchecking the check box 121, depending on whether the user wishes the data stored in the selected table to be displayed, as well as other information relating to the structure of this table, which in the context of table 100 is referred to as metadata.

The user then clicks on button 113, to proceed.

When the user clicks on button 113 for the second time, further elements are added to form 100B so that from 100C is produced as shown in Figure 8C. In addition to the elements shown on form 100B, form 100C comprises a representation of the table selected from the dropdown box 122, shown as element 132. Further information relating to the structure of this table, is shown in the form elements 133. The columns of the table 132 that are candidate keys are identified programmatically, and radio buttons are added to the form adjacent to these columns. In the case of this example, the first three rows of the table, entitled "Tax No, EMP No and EMP Name are candidate keys, such that three radio buttons 1311, 1312 and 1313 are provided.

According to this embodiment of the invention, the user now selects one of the three candidate key columns, by clicking on one of the three corresponding radio buttons 1311, 1312 or 1313.

As shown in Figure 8c, the user has selected the Emp No. column of the table 132.

The user then clicks on the button 113 for the third and final time, whereupon form 100 disappears, and is replaced by form 200 as shown in Figure 8D. Form 200 is intended to collect further information for the formation of the new table, and comprises a list having four columns to 206, 207, 208 and 209, in which is displayed the name and details of all columns added by the user to the list, in addition to the primary key as selected from form 100C, the name and details of which are displayed in the text boxes 210, 211 and 213. There are further provided text boxes 201 and 204, and check box 202 and dropdown box 203, in which a user can enter the name and information for further columns to be added to the table. This name and detail are transferred from the new column form elements 201, 202, 203 and 204 to the respective list columns 209, 208, 207 and 206, by clicking on the add column button 216. Similarly, columns can be removed from the list by clicking on the delete column button 215.

Once a user is satisfied that all columns required for the new table are present, the user clicks the create table button 214, whereupon form 200 is closed, and the user interface returns to the default database management environment. Simultaneously therewith, the database is itself updated so as to comprise the new table in accordance with the details provided by the entries in the forgoing forms 100 and 200.

Both forms 100 and 200 have a cancel button 114 and 213 respectively, by means of which the user can at any stage abandon the creation of the new table.

In check box 115, captions transfer data as well as metadata offers the user the possibility of populating the newly created table not only with the information relating to the primary key such as the data type precision and null ability of this column, but also transferring over the data entries found in that column. By selecting or deselecting this check box, the user can choose whether he wishes to use this data.

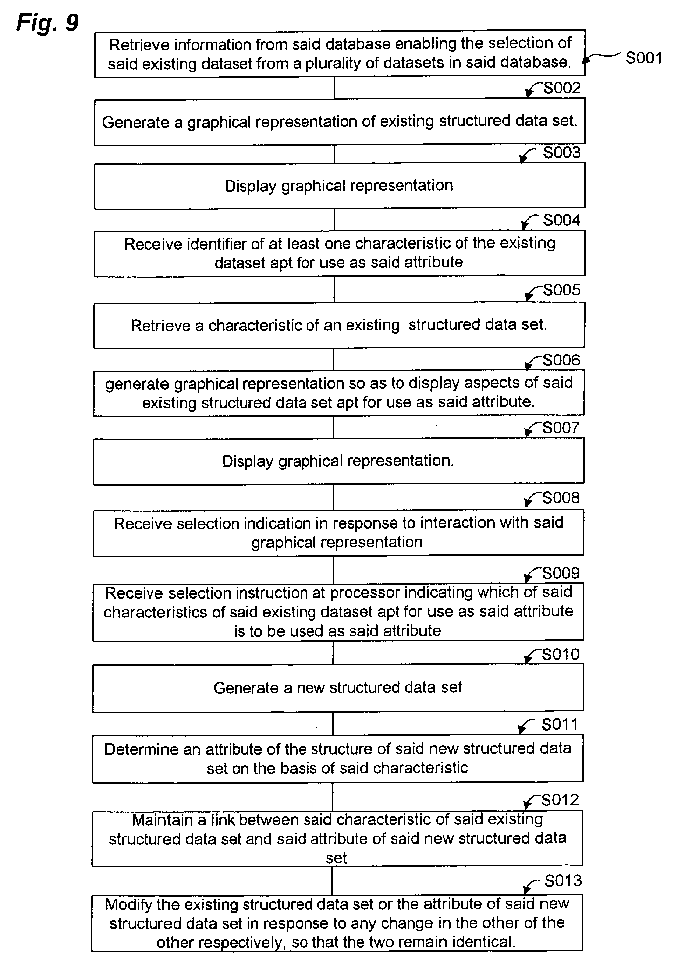

In the following a further embodiment of the invention will be described with regard to Fig. 9.

Figure 9 shows a method according to a further embodiment of the present invention.

The method of Figure 9 comprises all of the same method operations, operation S001 to operation S011 as described above with regards to the methods of Figures 1, 4 and 6.

Further thereto the method of Figure 9 comprises an operation S012 of maintaining a link between the characteristic of the existing structured data set and the attributes of the new structured data set, and an operation S013 of modifying the characteristic of the existing structured data set or the attributes of the new structured data set in response to any change in the other of the two respectively, so that the two remain identical.

For example, in the case of a relational database, wherein the new and existing data sets comprise relations, and the characteristics of the existing database is a candidate key thereof and the attributes of a new structured data set is the primary key thereof, a link is maintained so that any change to the primary key of the new relation or the candidate key of the existing relation results in a corresponding change in whichever of the two was not changed, so that the two remain identical.

The link itself may comprise an additional property of the respective primary and candidate keys, such that each references the other so that whenever an access to the database is made so as to change one of these attributes, this characteristic is read, and the attributes to which the link leads can be automatically updated in a corresponding manner.

Alternatively, a table may be defined in which the identities of the two attributes are listed as being linked, such that whenever any access is made to the database, it can be checked against the entries in this table, so that a command originally intended for one of these two attributes can be redirected so as to affect both. It may further be found desirable in certain circumstances, rather than updating the two attributes so as to be identical, rather to update one so that it differs from the other in a predetermined and programmatically defined manner.

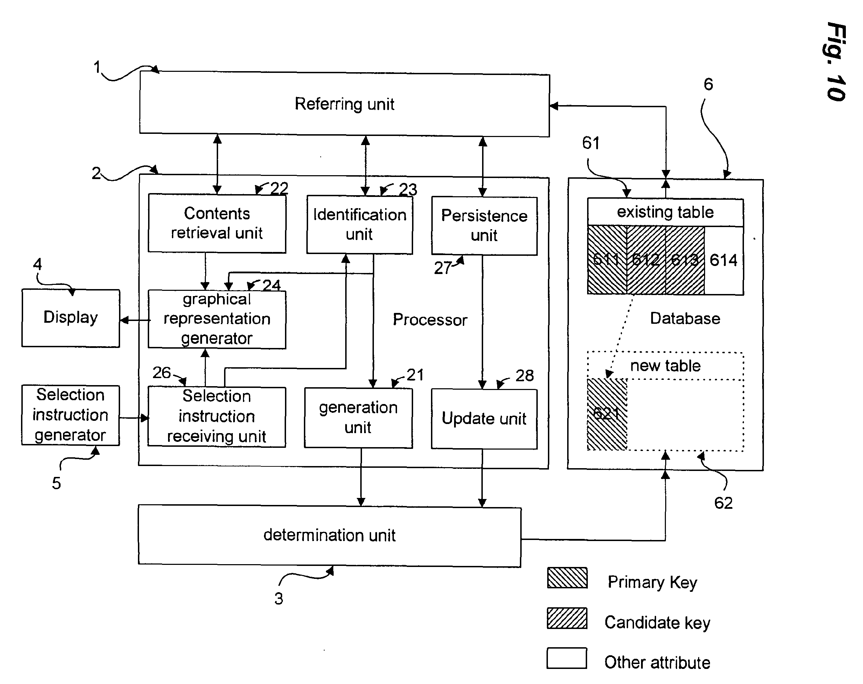

In the following a further embodiment of the invention will be described with regard to Fig. 10.

Figure 10 shows a structured data set generation system according to a further embodiment of the invention.

According to the embodiment of the invention shown in Figure 10, the structured data set generation system comprises all of the same elements as the systems described with relation to Figures 3, 6 and 7, and the processor further comprises a persistence unit maintaining a link between said characteristic of said existing structured data set and said attribute of said new structured data set, and an update unit modifing one of said existing structured data set and said attribute of said new structured data set in response to any change in the other of said existing structured data set and said attribute of said new structured data set respectively, so that the two remain identical.

The persistence unit 27 is in bi-directional communication with the referring unit 1, and the update unit 28 is in communication with the determination unit 3. The persistence unit is further able to transmit information to the update unit 28. Both the persistence unit 27 and the update unit 28 are incorporated in the processor 2.

The persistence unit 27 and the update unit 28 may each take the form of dedicated hardware, for example as a microchip or a plurality thereof, or consist of firmware loaded into for example an EPROM, or further consist of a set of software routines stored in a storage device such as Random Access Memory, a hard drive, a CDROM etc. Alternatively, these functions may be carried out as computing operations executed in a computer processor, which may be a conventional processor or one adapted for the performance of the invention. The software program causing these operations may be stored in a memory device such as Read Only Memory, Random Access Memory, a hard disk, a Compact Disk and so on.

In operation, the persistence unit acts so as to maintain a link between the characteristic of the existing structured data set and the attributes of the new structured data set.

The update unit modifies one of the existing structured data sets and the attribute of the new structured data set in response to any change in the other of said existing structured data set and said attributes of said new structured data set respectively so that the two remain identical.

Thus, for example, in the case of a relational database, comprising both the original existing structured data set 61 and the new structured data set 62, the persistence unit 27 interrogates the existing structured data set 61 and the new structured data set 62 by means of the referring unit 1, so as to monitor the links attributes 612 and 621, and in the case of a change being made to either of the links attributes 612 or 621, notifies the update unit 28, such that the update unit makes changes to whichever of the data structures 61 and 62 was not changed, so as to bring it into accord with whichever of the two data structures 61 and 62 has already been changed as detected by the persistence unit 27, by means of the determination unit 3.

By this means it is ensured that the two linked attributes 612 and 621, which originate from the same characteristic of the original existing data structure 61, do not diverge, or otherwise become mutually incompatible.

The persistence unit may detect changes in the linked attributes 612 and 621 by means for example, of regularly polling and comparing the two tables, or monitoring the activities of the determination unit, so as to intercept any activities of the determination unit which would lead to a change in either of the linked attributes.

The determination unit, as described above acts so as to generate a new structured data set, for example in the database 6 in which the existing data set is found. The determination unit may operate by transmitting SQL commands such as those described above, or may use API elements.

An API, or Application Program Interface is a set of routines, protocols, and tools for building software applications. An API assists the development of a program by providing a set of building blocks, which can be put together by a programmer. Most operating environments provide an API so that programmers can write applications consistent with the operating environment.

An API may comprise calls, subroutines, and software interrupts so that a program, usually a higher-level program such as an application program, can make use of the usually lower-level services and functions of another application, operating system, network operating system, driver, or other lower-level software program. The resulting library of functions provides new capability, such as writing a file in an application program's proprietary format, communicating over a TCP/IP network, or accessing an SQL database. The lower-level software may be integrated with the application program at compile/link time (using an include file or object library) or loaded (before the application program) as a driver. APIs are increasingly popular now that open systems are popular and customers insist that systems and products work with those of other vendors.

An example of an API is the StarOffice API developed by Sun Microsystems. In particular, the SDBCX Module offers a set of high level services and interfaces for database applications.

There follows an exemplary extract of a set of API calls that might be used by the determination unit to define the new structured dataset that would result from the entries made in the user interface described above in connection with figure 8.

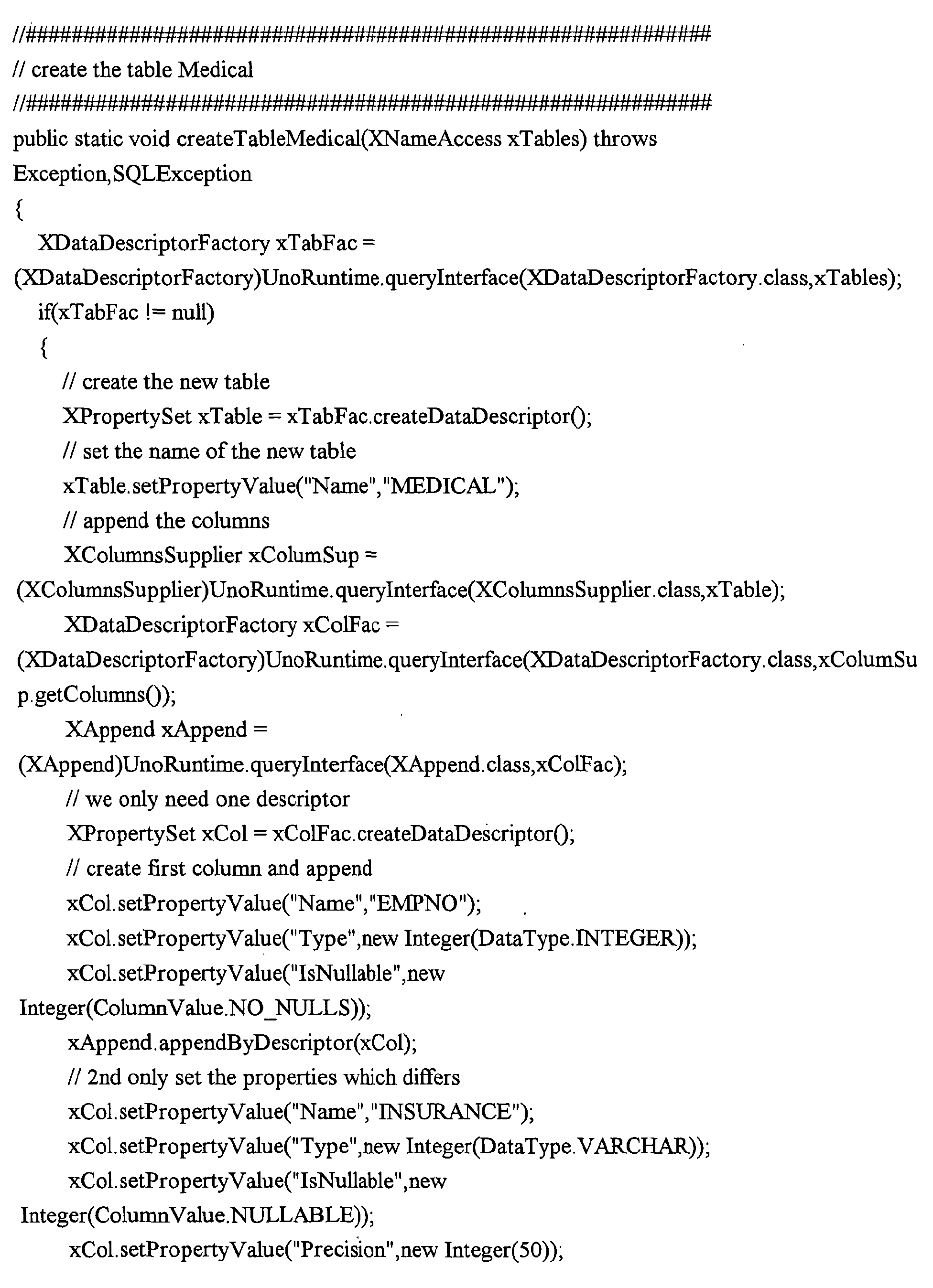

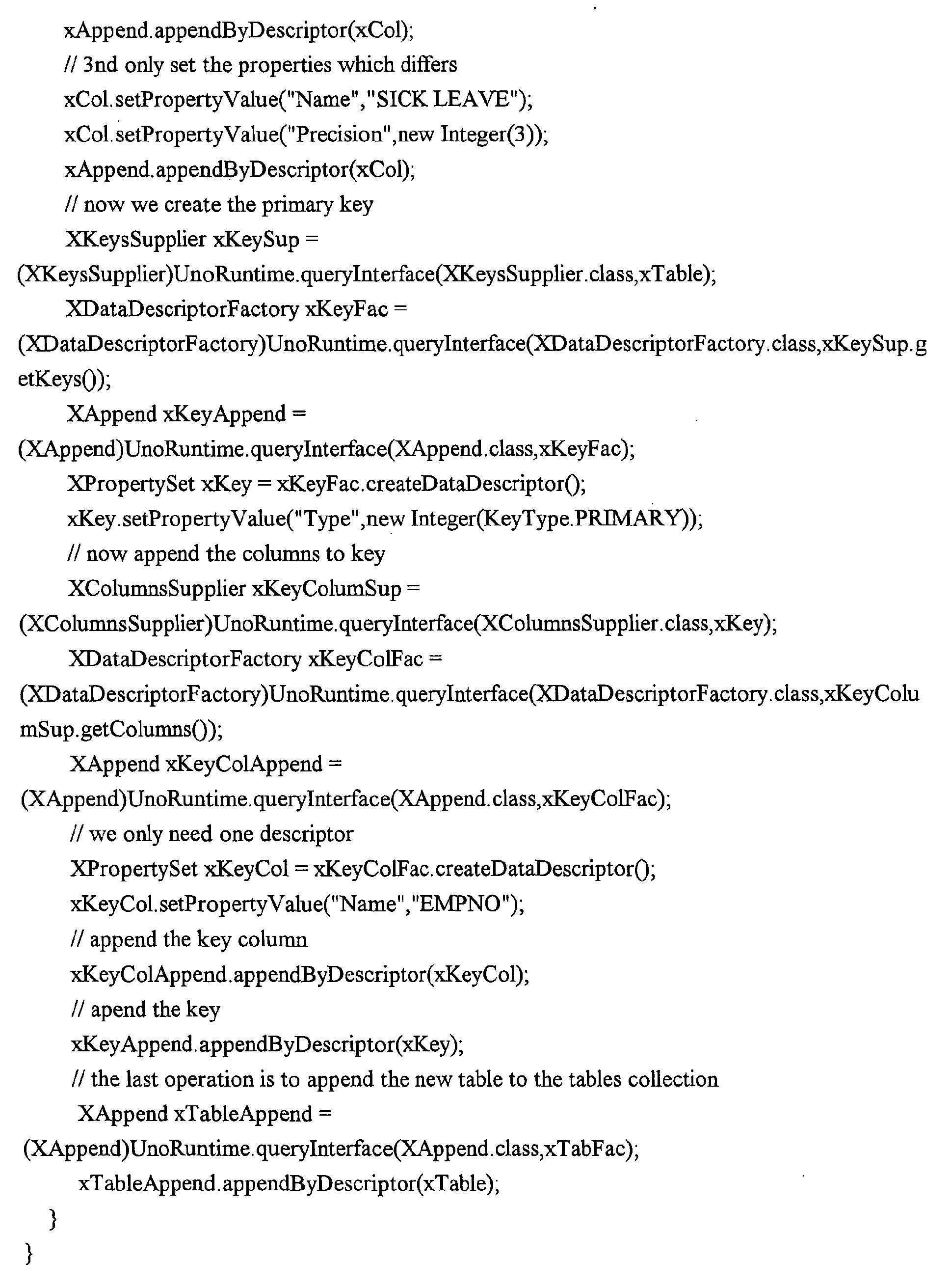

A program or programs may be provided having instructions causing a data processing device or a network of data processing devices to realize elements of the above embodiments and to carry out the method of at least one of the above operations. Further, a computer readable medium may be provided, in which a program is embodied, where the program is to make a computer execute the method of the above operation.

Also, a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. The computer-readable medium may constitute a data stream embodying the program. Also, the computer program may be contained on the tangible medium. Further, a data structure or a data stream may be provided including instructions to cause data processing means to carry out the above operations. The computer-readable medium may be constituted by the data stream or the data structure. Still further, a computer program product may be provided comprising the computer-readable medium.

Although the present invention may be realised by means of dedicated hardware, or by means of a program or set of programs executed on a stand alone computer system, according to a preferred embodiment of the invention the system according to the invention as described above for example with reference to figure 10 is realised by means of a set of programs executed on a plurality of computers in a client server architecture.

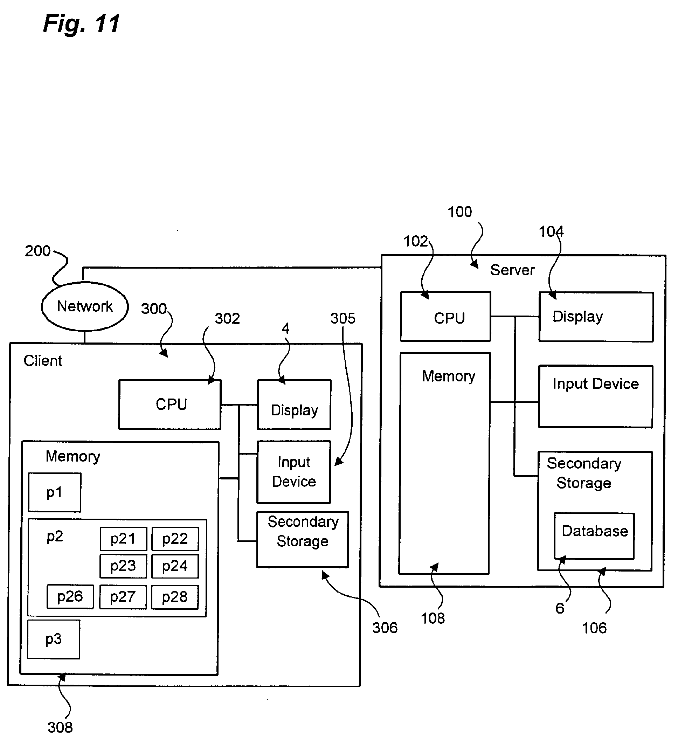

Figure 11 shows a structured data set generation system realised in a client-server architecture according to a further embodiment of the invention.

The system shown in figure 11 comprises a client 300 comprising a CPU 302, an input device 305, secondary storage 306 and a memory 308, all connected in a bus architecture. The client also comprises the display 4.
The system further comprises a server 100 and a network 200 connecting the server to the client. The server comprises a CPU 102, an input device 105, secondary storage 106 and a memory 108, all connected in a bus architecture.

According to this embodiment of the invention, the client memory stores program code sections corresponding to the functional units described with reference to figure 10, i.e. a program code section p1 corresponding to the referring unit 1, a program code section p2 corresponding to the referring unit 2, a program code sections p21 to p28 corresponding to units 21 to 28 respectively, and a program code section p3 corresponding to the referring unit 3. The database 6 containing the existing structured dataset 61 is stored in the secondary storage 106 of the server 100.

In use, the CPU of the client 300 executes the various program code sections so as to carry out the various functions of the present invention as described above.

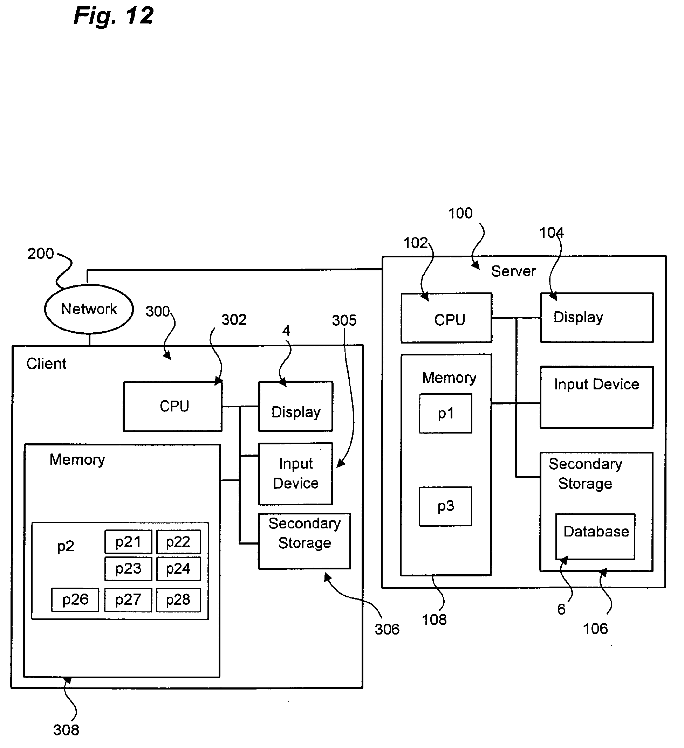

Similarly, figure 12 shows a structured data set generation system realised in a client-server architecture according to a further embodiment of the invention. The system shown in figure 12 comprises all of the same elements as that described with reference to figure 11. According to this embodiment however, the program code section p1 corresponding to the referring unit 1, and the program code section p3 corresponding to the referring unit 3 are stored in the memory 108 of the server 100, and executed on the CPU thereof, so that access to the database 6 is made locally.

It will be clear to the skilled person that other distributions of functions between client and server, and between hardware and software are possible. In particular, it will be clear that while described with regard to a client server architecture, all functions could be equally realised on a single standalone computer.

According to another embodiment, a client for submitting computing jobs in a distributed computing environment has the following configuration.
1) Client for submitting computing jobs in a distributed computing environment, including
   a code section having instructions to receive a job request including an instruction to execute a computing job;
   a code section having instructions to obtain selection information specifying a job handler for handling the computing job; and
   a code section having instructions to submit the computing job to the selected job handler.
2) Client of 1), wherein the selection information includes configuration information specifying a job distribution policy and including a code section having instructions to select the job handler based on the job distribution policy.
3) Client of 2), further comprising a database, in which said existing structured data set is incorporated.
4) Client of 3), including a code section having instructions to retrieve information from said database via said referring unit, said information being such as to enable the selection of said existing dataset from a plurality of datasets in said database.
5) Client of 3) or 4), wherein said database further comprises said new structured data set.
6) Client of any of 1) to 5) including a code section having instructions to identify at least one characteristic of said existing dataset apt for use as said attribute.
7) Client of 6) including a code section having instructions to identify all characteristics of said existing dataset apt for use as said attribute.
8) Client of 6) or 7) including a code section having instructions to receive a selection instruction indicating which of said characteristics of said existing dataset apt for use as said attribute is to be used as said attribute.
9) Client of any of 5) to 8) wherein said database is a relational database.
10) Client of 9) wherein at least one of said new structured data set and said existing structured data set is a relation.
11) Client of any of 9) or 10) wherein said attribute comprises the identity of the primary key of said new structured data set.
12) Client of any of 9) to 11) wherein said characteristic is the identity of a candidate key of said existing structured data set.
13) Client of any of 10) to 12) wherein said characteristic is the identity of a candidate key of said existing structured data set.
14) Client of any of 10) to 13) wherein said characteristic further comprises other data descriptive of said candidate key of said existing structured data set.
15) Client of any of 10) to 14) wherein said characteristic further comprises data belonging to said candidate key of said existing structured data set.
16) Client of any of 13) to 15) further including a code section constituting graphical representation generator for the generation of a graphical representation of at least a part of said existing structured data set, and display for the display of said graphical representation of at least a part of said existing structured data set to a user, wherein said graphical representation generator is to be in communication with said processor.
17) Client of 16) wherein said graphical representation generator includes a code section having instructions to cause said display to display aspects of said existing structured data set apt for use as said attribute.
18) Client of any of 16) or 17) further including a code section having instructions constituting a selection indication generator for generating said selection indication in response to interaction with said graphical representation, wherein said selection indication generator is to be in communication with said processor.
19) Client of any of 1) to 18), including a code section having instructions to use a Structured Query Language.
20) Client of any of 2) to 19) including
   a code section having instructions to maintain a link between said characteristic of said existing structured data set and said attribute of said new structured data set, and
   a code section having instructions to modify one of said existing structured data set and said attribute of said new structured data set in response to any change in the other of said existing structured data set and said attribute of said new structured data set respectively, so that the two remain identical.

## Claims

1. A method of organizing data, including
referring to an existing structured data set and retrieving a characteristic thereof,
performing a processing operation so as to generate a new structured data set, and
determining an attribute of the structure of said new structured data set on the basis of said characteristic.

2. The method of claim 1 wherein said characteristic is determined so as to be identical to an attribute of said existing structured data set.

3. The method of claim 2 wherein said existing structured data set is incorporated in a database.

4. The method of claim 3 further comprising the operation of retrieving information from said database enabling the selection of said existing dataset from a plurality of datasets in said database.

5. The method of any of claims 3 to 4 wherein said new structured data set is further added to said database.

6. The method of any preceding claim comprising the further operation of identifying at least one characteristic of said existing dataset apt for use as said attribute.

7. The method of any preceding claim comprising the further operation of identifying all characteristics of said existing dataset apt for use as said attribute.

8. The method of claim 6 or 7 comprising the further operation of receiving a selection instruction indicating which of said characteristics of said existing dataset apt for use as said attribute is to be used as said attribute.

9. The method of any of claims 5 to 8 wherein said database is a relational database.

10. The method of claim 9 wherein at least one of said new structured data set and said existing structured data set is a relation.

11. The method of any of claims 9 or 10 wherein said attribute comprises the identity of the primary key of said new structured data set.

12. The method of any of claims 9 to 11 wherein said characteristic is the identity of a candidate key of said existing structured data set.

13. The method of any of claims 10 to 12 wherein said characteristic is the identity of a candidate key of said existing structured data set.

14. The method of any of claims 10 to 13 wherein said characteristic further comprises other data descriptive of said candidate key of said existing structured data set.

15. The method of any of claims 10 to 14 wherein said characteristic further comprises data belonging to said candidate key of said existing structured data set.

16. The method of any of claims 13 to 15 comprising the further operations of:
generating a graphical representation of at least a part of said existing structured data set is generated; and
displaying said graphical representation to a user.

17. The method of claim 16 wherein said graphical representation is generated so as to display aspects of said existing structured data set apt for use as said attribute.

18. The method of any of claims 16 or 17 wherein said selection indication is generated in response to interaction with said graphical representation.

19. The method of any preceding claim, wherein at least one of said operations of retrieving and determining are realised by means of Structured Query Language.

20. The method of any of claims 2 to 19 comprising the further operations of:
maintaining a link between said characteristic of said existing structured data set and said attribute of said new structured data set; and
modifying one of said existing structured data set and said attribute of said new structured data set in response to any change in the other of said existing structured data set and said attribute of said new structured data set respectively, so that the two remain identical.

21. A structured data set generation system, comprising
a referring unit adapted to refer to an existing structured data set and to retrieve a characteristic thereof;
a processor comprising a generation unit adapted to generate a new structured data set; and
a determination unit adapted to determine an attribute of the structure of said new structured data set on the basis of said characteristic;
wherein said processor is in communication with said referring unit and with said determination unit.

22. The system of claim 21 wherein said determination unit is further adapted to determine said characteristic so as to be identical to an attribute of said existing structured data set.

23. The system of claim 22 further comprising a database, in which said existing structured data set is incorporated.

24. The system of claim 23 wherein said processor comprises a contents retrieval unit adapted to retrieve information from said database via said referring unit, said information being such as to enable the selection of said existing dataset from a plurality of datasets in said database.

25. The system of any of claims 23 to 24 wherein said database further comprises said new structured data set.

26. The system of any of claims 21 to 25 wherein said processor further comprises an identification unit for identifying at least one characteristic of said existing dataset apt for use as said attribute.

27. The system of claim 26 wherein said identification unit is adapted to identify all characteristics of said existing dataset apt for use as said attribute.

28. The system of claim 26 or 27 wherein said processor further comprises a selection instruction receiving unit for receiving a selection instruction indicating which of said characteristics of said existing dataset apt for use as said attribute is to be used as said attribute.

29. The system of any of claims 25 to 28 wherein said database is a relational database.

30. The system of claim 29 wherein at least one of said new structured data set and said existing structured data set is a relation.

31. The system of any of claims 29 or 30 wherein said attribute comprises the identity of the primary key of said new structured data set.

32. The system of any of claims 29 to 31 wherein said characteristic is the identity of a candidate key of said existing structured data set.

33. The method of any of claims 30 to 32 wherein said characteristic is the identity of a candidate key of said existing structured data set.

34. The system of any of claims 30 to 33 wherein said characteristic further comprises other data descriptive of said candidate key of said existing structured data set.

35. The system of any of claims 30 to 34 wherein said characteristic further comprises data belonging to said candidate key of said existing structured data set.

36. The system of any of claims 33 to 35 further comprising a graphical representation generator for the generation of a graphical representation of at least a part of said existing structured data set, and display for the display of said graphical representation of at least a part of said existing structured data set to a user, wherein said graphical representation generator is in communication with said processor.

37. The system of claim 36 wherein said graphical representation generator is adapted to cause said display to display aspects of said existing structured data set apt for use as said attribute.

38. The method of any of claims 36 or 37 further comprising a selection indication generator for generating said selection indication in response to interaction with said graphical representation, wherein said selection indication generator is in communication with said processor.

39. The system of any of claims 21 to 38, wherein at least one of said referring unit and said determination unit is adapted to carry out its respective operations at least partially by means of Structured Query Language.

40. The system of any of claims 22 to 39 wherein said processor further comprises;
a persistence unit adapted to maintain a link between said characteristic of said existing structured data set and said attribute of said new structured data set; and
an update unit adapted to modify one of said existing structured data set and said attribute of said new structured data set in response to any change in the other of said existing structured data set and said attribute of said new structured data set respectively, so that the two remain identical.

41. A program having instructions adapted to carry out the method of any of claims 1 to 20.

42. A data structure having instructions adapted to cause data processing means to carry out the method of at least one of the claims 1 to 20.

43. A data stream having instructions adapted to cause data processing means to carry out the method of at least one of the claims 1 to 20.

44. A computer readable medium in which a program is embodied, said program having instructions adapted to carry out the method of any of claims 1 to 20.

45. A computer program product comprising the computer readable medium of claim 44.

46. A computer system comprising a system according to any one of claims 21 to 40.
